# EUROPEAN PATENT APPLICATION

(11) **EP 1 801 720 A1**
(43) Date of publication of application: **27.06.2007**
(21) Application number: 05270097.8
(22) Date of filing: 22.12.2005
(51) Int. Cl.: G06F 21/00

(54) **Authorisation and authentication**

(71) Applicant: Microsoft Corporation, Redmond WA 98052 (US)
(72) Inventor: Gkantsidis, Christos c/o Microsoft Research Ltd., Cambridge, Cambridgeshire CB3 0FB (GB); Miller, John c/o Microsoft Research Ltd., Cambridge, Cambridgeshire CB3 0FB (GB); Ranson, Stuart c/o Microsoft Research Ltd., Cambridge, Cambridgeshire CB3 0FB (GB); Hydrie, Aamer, Redmond, WA 98052 (US); Tan, See-Mong c/o Microsoft Corporation, Redmond, WA 98052 (US); Rodriguez, Pablo Rodriguez Microsfot Research Ltd., Cambridge, Cambridgeshire CB3 0FB (GB); Costa, Manuel c/o Microsoft Research Ltd., Cambridge, Cambridgeshire CB3 0FB (GB)
(74) Representative: Wallis, Helen Frances Mary

(57) **Abstract**

The invention relates to content distribution over a network and provides methods of controlling the distribution, of receiving the content and of publishing content. The method of controlling distribution of content over a network includes receiving a content description and location information for a source of the content from a publisher, where the content description comprises authorisation details associated with the publisher. The validity of the authorisation details is checked and if found to be valid, the content description is provided to a node in the network.

## Description

### BACKGROUND

Content distribution systems have been developed to enable data such as software updates and critical patches to be distributed to nodes in a network. Typically these systems comprised many servers which were placed in the network, with nodes connecting directly to one of the servers to download the required file. However, such systems are constrained by the connection bandwidth to the servers and require considerable investment to increase the capacity of the system. Consequently, content distribution systems have been developed which rely on a fully distributed architecture with nodes in the network participating in the distribution process. Such systems may be referred to as peer-to-peer or peer-assisted content distribution systems. In such a system, the server may divide the file to be distributed into a number of blocks and provide these blocks to nodes in the network. As soon as a node has received one or more blocks, the node can act as a source of the received blocks for other nodes whilst concurrently receiving further blocks until they have received all the blocks of the file.

Malicious users can cause problems for such systems in many ways. These include distribution of false content (i.e. content which is not what it purports to be). This false content may include viruses or other harmful programs or may just waste network resources sharing data which is unwanted. Malicious users may distribute corrupted downloaded data which may then be distributed by other peers who are unaware that it is corrupted. This may result in such large scale dissemination of corrupted data that the distribution of a particular piece of data is impossible. In other examples, malicious users may instigate denial of service attacks against particular elements in the network, for example by making repeated connection attempts which may subsequently be aborted but which consume resources. Depending on where the denial of service attack is directed against, such an attack may cause the entire distribution system to fail or may just affect one or more individual users.

### SUMMARY

The summary is provided to introduce a selection of the concepts in a simplified form that are further described below in the detailed description. This summary is not intended to identify key features or essential features of the claimed subject matter nor is it intended to be used as an in determining the scope of the claimed subject matter.

A first example provides a method of controlling distribution of content over a network. A content description and location information for a source of the content is received from a publisher, where the content description includes authorisation details for that publisher. The validity of these authorisation details is checked and if found to be valid the content description may be provided to a node in the network.

Advantageously, by providing authorisation details for a publisher, the other nodes in the content distribution system can have confidence that the content being published is likely to be that which they expect. The authorisation details also allow nodes to check that the authorisation of the publisher is still valid.

The location information may be included within the content description. Where the location information is not included within the content description, the location information may be provided to a node in the network at the same time as the content description or in response to a separate request.

Preferably, the content description is provided to a node in response to a request from the node.

The method may further comprise: confirming an identity of the node prior to providing the content description to the node.

Preferably, the authorisation details associated with a publisher comprises details of a certificate issued by a certificate issuing entity, and wherein checking the validity of the authorisation details comprises: accessing a certificate revocation list issued by the certificate issuing entity; and determining if the certificate is on the certificate revocation list.

The method may further comprise: storing the certificate revocation list; and providing the certificate revocation list to a node in the network in response to a request from the node.

The method may further comprise: maintaining a list of nodes that are connected to the network and that hold at least part of the content; and providing at least a portion of the list of nodes to a node in the network in response to request from the node.

The method may further comprise: confirming an identity of the node prior to providing the at least a portion of the list of nodes.

A second example provides a computer program comprising computer program code means adapted to perform all the steps of any of the methods described above when the program is run on a computer. The computer program may be embodied on a computer readable medium.

A third example provides a method of receiving content being distributed over a network comprising: receiving a content identifier and a tracker pointer; requesting a content description from a first tracker identified from the tracker pointer, the content description comprising authorisation details associated with a publisher of the content; receiving the content description; checking the validity of the authorisation details; receiving information on a source of the content from a second tracker; and requesting a portion of the content from the source.

Preferably, the first and the second trackers are the same.

Where the first and second trackers are the same, the content description may further comprise the information on the source of the content.

The information on the source of the content may be received in response to the request for the content description or in response to a separate request.

Preferably, the content description further comprises information identifying the second tracker.

Preferably, the authorisation details associated with a publisher comprises details of a certificate issued by a certificate issuing entity, and wherein checking the validity of the authorisation details comprises: accessing a certificate revocation list issued by the certificate issuing entity; and determining if the certificate is on the certificate revocation list.

The method may further comprise: providing identification information to the first tracker prior to receiving the content description.

The method may further comprise: providing identification information to the source; and requesting identification information from the source.

The method may further comprise: receiving the portion of the content from the source; checking the validity of the portion of the content; and if the portion is not valid, blocking communication with the source for a period of time.

A fourth example provides a computer program comprising computer program code means adapted to perform all the steps of any of the methods described above when the program is run on a computer. The computer program may be embodied on a computer readable medium.

A fifth example provides a method of publishing content for distribution over a network, the method comprising: requesting authorisation to publish; receiving authorisation details; creating a content description comprising the authorisation details; and transmitting the content description and location information for a source of the content to a tracker server.

Preferably, requesting authorisation comprises requesting a certificate from a certificate issuing entity, and wherein the authorisation details comprise details of the certificate.

The location information may be included within the content description.

A sixth example provides a computer program comprising computer program code means adapted to perform all the steps of any of the methods described above when the program is run on a computer. The computer program may be embodied on a computer readable medium.

Another example provides a method of distribution of content over a network in which a publisher requests authorisation to publish and creates a content description including details of authorisation of the publisher. The content description and information on a source of the content to be published are transmitted to a tracker server which checks the validity of the authorisation details for the publisher and if the authorisation details are valid provides the content description to one or more nodes in the network.

The methods described may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a content distribution system;
FIG. 2 is an example flow diagram showing the operation of the system of FIG. 1; and
FIG. 3 is a schematic diagram of another content distribution system.
Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilised. The description sets forth the functions of the example and the sequence of steps for constructing and operating the example. However, the same or equivalent functions and sequences may be accomplished by different examples.

Although the present examples are described and illustrated herein as being implemented in a peer-assisted distribution system (also known as a peer-to-peer distribution system), the system described is provided as an example and not a limitation. As those skilled in the art will appreciate, the present examples are suitable for application in a variety of different types of content distribution and / or content sharing systems.

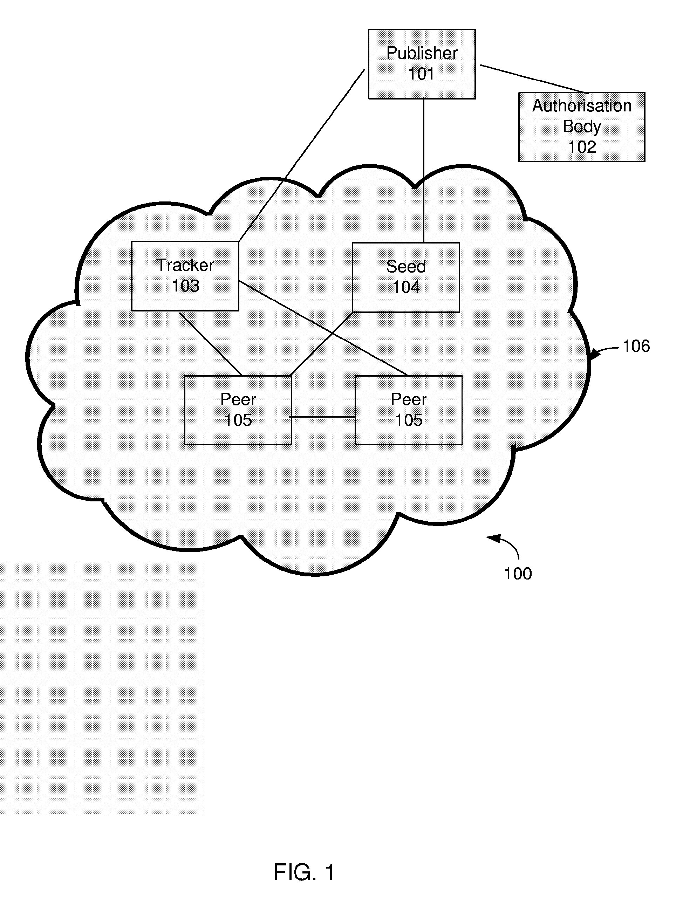

FIG. 1 is a schematic diagram of a content distribution system 100 which comprises a publisher 101, an authorisation body 102, a tracker 103, a seed 104 and two peers 105. Content distribution occurs within the cloud 106. The content may be any type of data and may be distributed, for example, as encoded blocks. The publisher 101 is the entity which provides the content and which is authorised by an authorisation body 102. The publisher may be a user or corporation and may lie outside the content distribution cloud 106. The tracker 103 is a server which helps peers 105 find other peers that are participating in the distribution of a particular piece of content. The seed 104 is a client which is usually always on and is where the publisher places a piece of content for subsequent distribution within the system. A seed 104 uploads the content to a small number of peers 105 in the system 100 (this may be to as few as a single peer) but does not download the same content from other nodes in the system. The term 'node' is used herein to refer to any logical entity within the system. A peer 105 is a client which is interested in obtaining the content held by the seed 104. A peer will download the content from nodes (i.e. peers or seeds) in the system and may also upload those parts of the content that it has received to other peers in the system. A peer may act as a temporary or virtual seed once it has received all the particular piece of content, by making the content available for uploading to other peers in the system, whilst no longer downloading the content from peers. The content may be distributed within the cloud in an encoded format or alternatively the content may be not be encoded. FIG. 1 shows some logical connections between parts of the system 100, however those shown are not exhaustive and are for illustration purposes only.

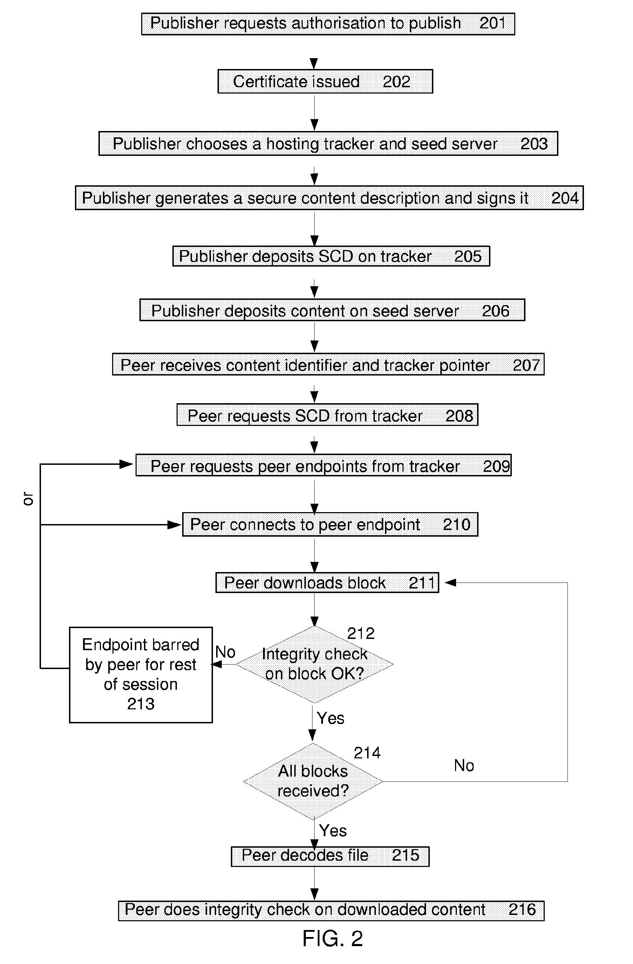

An example of the operation of the system 100 shown in FIG. 1 can be described with reference to the flow chart shown in FIG. 2. The publisher 101 requests authorisation to publish from the authorisation body 102 (step 201). In response to this, the authorisation body issues a certificate (step 202). This certificate may be specific to a piece of content or the certificate may not relate to any particular piece of content and may be used by the publisher when publishing any piece of content in any content distribution cloud. The publisher 101 now chooses a hosting tracker 103 and a seed server 104 (step 203) and generates a secure content description (SCD) which it digitally signs (step 204). The SCD includes details of the certificate issued to the publisher (in step 202 above) and information to enable integrity checking of the downloaded content. The SCD will be described in more detail below. The content distribution cloud 106 is then established by the publisher depositing the signed SCD on the tracker 103 (step 205) and the content on the seed server 104 (step 206). A peer 105 receives a content identifier and a tracker pointer (step 207). This information may be received from a website, URI (Uniform Resource Identifier) or as part of an application experience (e.g. as part of an Interactive Media Player, iMP). Using this information, the peer 105 can request a SCD from the identified tracker 103 (step 208) and then request details of peer endpoints from a tracker (step 209). These peer endpoints are details of one or more other peers which the peer can connect to in order to download the content. The peer endpoints may also include details of the seed 104, particularly in the early stages of a cloud 106 when there are not many peers within the cloud. The peer 105 then connects to one or more of the identified peer endpoints (step 210) and downloads a block of the content (step 211). Before adding the block to the peer's store of received blocks or forwarding it to anyone else, the integrity of the block is verified (step 212). If the integrity of the block is found to be suspect, the peer makes a note of the offending peer endpoint and will not contact it or accept connections from it for the remainder of the content distribution session (step 213). Instead, the peer will connect to another peer endpoint (step 210) and if necessary will first request further details of peer endpoints from the tracker (step 209). If the integrity of the block is verified (in step 212), the peer determines whether it has received all the required blocks of the content (step 214). If it still requires additional blocks, it will proceed to download another block (step 211). Once the peer has downloaded all the required blocks of the content, the peer decodes the file (step 21 5) and does an integrity check on the downloaded content (step 216). Further detail on the individual steps is provided below.

By authorising the publisher, the other nodes in the content distribution system can have confidence that the content being published is likely to be that which they expect. The nodes can, if they wish, also check that the authorisation of the publisher is still valid. Furthermore, if a publisher is found to be publishing invalid, illegal, offensive or other objectionable content, the authorisation can be revoked, therefore preventing the publisher from publishing further content. Once a publisher has had their authorisation revoked, further dissemination of the content in the cloud 106 can be restricted by the tracker and once a peer becomes aware of the revocation, they may cease their activity within the cloud, as described in more detail below.

The request for authorisation to publish (step 201) may be made by applying for authority from a certification authority (CA) such as Microsoft's (trade mark) certification authority. In some cases, the CA with the root credentials (e.g. Microsoft (trade mark)) may authorise a publisher to sub-authorise publishers and they may in turn also be able to authorise sub-publishers. For example, the CA may authorise a publisher (for example, a fictitious publisher called 'Publisher 1') and may allow them to sub-authorise parts of the organisation (e.g. 'Publisher 1- news' and 'Publisher 1- comedy') as publishers. This process of sub-authorisation may also be referred to as delegation.

The certificate issued (in step 202) in response to the request (in step 201) may take the form of an X.509 certificate. X.509 is an ITU-T (the International Telecommunication Union's Telecommunication Sector) standard for public key infrastructure (PKI). The certificate may be provided to the publisher 101 or may be stored in a central repository (not shown in FIG. 1) and details provided to the publisher 101. Any other suitable authorisation method could be used instead of X.509 certificates including other certificate schemes, shared secrets and derived tokens.

The selection of a hosting tracker (step 203) may involve the publisher setting up their own tracker server or obtaining permission to use a third party tracker server. The tracker 103 is also authorised by the CA so that a peer can be confident of the integrity of the information obtained from a tracker. The seed 104 which is selected (also in step 203) may offer the content to peers within the cloud using any suitable protocol, including, but not limited to, any Avalanche-supported protocol, BitTorrent and http (hyper text transfer protocol). Avalanche is a peer-assisted content distribution protocol developed by Microsoft Corporation (trade mark) which uses network coding. This means that each node in the system generates and transmits encoded blocks of information, these newly encoded blocks being a linear combination of all the blocks currently held by the particular node. One of the benefits of such a protocol is that it minimises the probability that a particular part (or block) of the content is or becomes rare in the network.

The secure content description (SCD) generated by the publisher (in step 204) is a self-certifying structure describing the content publisher and enabling validation of transmitted and reassembled content. The term 'self-certifying' is used herein to refer to the fact that the structure contains its own proof that it has not been tampered with, for example it may have a cryptographic signature which ensures that the content has not been tampered with. The SCD does not need to be encrypted, but some or all of it could be encrypted in some examples. The SCD may include some or all of the following:
- A publisher identifier, such as the certificate thumbprint or Common Name (CN) of a content publisher or the publisher's encoded X.509 certificate.
- A hash algorithm and hash value for the decoded content.
- A unique identifier for the content. This is typically the value of the content hash.
- Transfer settings required to specify homomorphic hashes, such as number of blocks and encoding algorithm.
- Homomorphic hash algorithm specifications and values.
- One or more seed endpoint descriptions.
- One or more tracker endpoint descriptions.
- Metadata describing the content properties, including suggested file name, file length, media type, rating, originator (which can be distinct from the publisher) etc.

The SCD is signed by the publisher (in step 204) for example using the publisher's private key which can be validated by a public key traced to the root CA via a valid certificate chain. An example of a certificate chain is as follows:
Microsoft holds root certificate
'Publisher 1' issued certificate by Microsoft on 9/9/05, expires 9/9/06, can delegate (i.e. can sub-authorise)
'Publisher 1- news' issued certificate by 'Publisher 1' on 10/9/05, expires 9/9/06, cannot delegate

When the signed SCD is deposited by the publisher on to the tracker (step 205), the tracker may confirm that the publisher is still authorised by the CA. This may be achieved by the tracker confirming that the publisher is not on the Certificate Revocation List (CRL) published by the entity that issued the certificate to the publisher. The CRL lists certificates that although previously issued have subsequently been revoked by the CA or delegate (i.e. by the certificate issuing entity). The tracker 103 may hold copies of CRLs locally, but ideally checks with CAs or their delegates for updated CRLs regularly (e.g. every 1 5 or 30 minutes) to minimise the window of vulnerability. The certificate chain may include details of where the master CRL is located for each authorising entity (e.g. a url, IP address or other endpoint description). As anyone who can issue a certificate can also revoke certificates that they issued, it may be necessary to check more than on CRL. For example, in the example certificate chain given above, CRLs published by both Microsoft and 'Publisher 1'. Each CRL includes (either in the list or in associated information) details of when the CRL was last updated and how regularly the CRL should ideally be rechecked (e.g. "Updated 10 October 2005 at 16.09. Re-check every 2 hours"). The CRLs are created in such a manner that they cannot be edited by anyone other than the issuing entity (i.e. the CA or their delegate). For example, only Microsoft (trade mark) can amend their CRL which lists certificates Microsoft (trade mark) originally issued but have subsequently revoked and only 'Publisher 1' can amend their CRL which lists certificates that 'Publisher 1' initially issued, as a delegate for Microsoft, but that 'Publisher 1' have subsequently revoked.

If a tracker, when checking a CRL, identifies that the publisher of a piece of content has had their authorisation revoked, the tracker may stop distributing the SCD (in step 208) and details of peer endpoints (in step 209).

Having established the cloud (in steps 205 and 206), the publisher 101 may play no further part in the content distribution process. However, the publisher may in another example, update and reissue the SCD (e.g. by repeating steps 204 and 205) whilst the content is being distributed within the cloud 106.

The content identifier and tracker pointer (received in step 207) may be in the form of a URI such as:
avalanche://mytracker.microsoft.com/0123456789ABCDEF0123456789ABCDEF In another example both the content identifier and tracker pointer may be provided in a single 128 bit identifier. In another example, the information may be provided in a small file (e.g. via a web download) with a locally registered type which, when downloaded and activated, invokes the content distribution client e.g. Avalanche. The content identifier and tracker pointer may include details of the certificate issued to the publisher.

The tracker pointer may be a pointer to an IP (internet protocol) address, a DNS (Domain Name System) entry or use any other method of specifying a network endpoint. Use of a DNS entry may be advantageous because it provides flexibility and scalability of routing. For example the DNS server can direct the peer to an IP address of a tracker which is not hardwired into the tracker pointer and may change. This is beneficial where there may be several tracker servers and the DNS server can direct peers to different servers in sequence to share the load. Furthermore, use of a DNS entry allows for additional trackers to be added or for trackers to be taken offline for maintenance, if required, without the need to change the tracker pointer.

The content identifier and tracker pointer may be actively retrieved (in step 207) by the peer and this may be initiated by a user input at the peer or by an application running on the peer. In an example, the peer may receive the content identifier and tracker pointer in response to obtaining authorisation to participate in the cloud 106, for example by purchasing the right to particular content (e.g. the right to download a film may be purchased from an online store). Such authorisation may be in the form of a certificate, a shared secret, a derived token or any other suitable authorisation method. In another example, the content identifier and tracker pointer may be pushed to the peer, for example to an application such as a media player running on the peer. The push may be in response to a previous indication of interest from the peer, e.g. a peer may indicate the types of news items, audio clips or video clips which are of interest and then when content which fits the criteria becomes available, the content identifier and tracker pointer may be pushed to the peer.

When the peer 105 requests the SCD from the tracker (in step 208), the peer and the tracker may be required to mutually authenticate to prove that each is authorised to perform these roles of peer and tracker (as described in more detail below). However, in another the example the SCD may be considered public information and the mutual authentication may occur at a later stage (in step 209) prior to exchange of more private information. On receipt of the SCD, the peer obtains information on the publisher's certificate chain (as described above). At this point, the peer may also retrieve a Certificate Revocation List (CRL) issued by the authority which issued the certificate to the publisher to ensure that the publisher is still authorised. As described above, a copy of the CRL may be stored at the tracker along with details of how up to date the CRL copy is. The peer may retrieve a copy of the CRL stored at the tracker or alternatively may retrieve a copy of the CRL master from the authorising body which issues the list. The CRL is likely to be a large file (e.g. several Mbytes) and consequently the peer may not necessarily download an updated CRL before every connection and may instead only download a new CRL when they join a new content cloud 106. By connecting to the tracker 103 to retrieve the CRL, rather than the certificate issuing body, the peer may avoid a potential bottleneck in the system. If a peer, when checking a CRL, identifies that the publisher of a piece of content has had their authorisation revoked, the peer may end its participation in the cloud and not download further blocks. The peer may also delete any blocks of the content that they have already received.

The tracker from which the peer requests the SCD (in step 208) may be the same or different to the tracker from which the peer requests information on peer endpoints (in step 209). Where the two trackers are different, the information on the second tracker, from which the peer requests information on peer endpoints (in step 209), may be identified in the SCD provided by the first tracker, (see description of the SCD above).

Before the peer can obtain information on peer endpoints for the content cloud from the tracker (in step 209), the peer authenticates the tracker or alternatively, mutual authentication may occur between the tracker and the peer. This authentication may occur earlier in the process (e.g. in step 208) or may occur at this stage. The authentication process confirms to the peer that the tracker is an authorised tracker by sharing details of the trackers authorisation by a CA. Again the peer may choose to consult the relevant CRL. This prevents rogue trackers from being established within the cloud. If mutual authentication occurs, the tracker is also able to identify the peer (e.g. using a unique host identifier), although it may not be necessary for the peer to have a specific authorisation to participate in a cloud. The use of a unique peer identification mechanism enables the tracker to determine if a peer is making multiple requests for peer endpoint information, which may indicate that the peer has a malicious intent. The tracker may for this reason, or any other, decide to block a peer from a content cloud. The peer identification may be allocated to a peer for use in all situations (e.g. all clouds that they join) or may be allocated on a more regular basis (e.g. per cloud, per publisher, per network provider, per month etc).

The tracker may provide a peer with peer endpoint information (in step 209) for randomly selected peers, for peers selected according to a locality algorithm or peers selected according to any other criteria (e.g. connection speed of the peer). The tracker may limit the number of peers that it provides information on to any one peer and may also limit the regularity with which a peer (e.g. referenced to a host identifier) can request peer endpoint information (e.g. a limit of information on 10 peers every 1 5 minutes). This is to mitigate information disclosure, because the peer endpoint information is potentially sensitive and would be useful to a malicious user or to an advertiser. The peer endpoint information may comprise:
- One or more network endpoint descriptions, such as an IP endpoint or a URL (uniform resource locator).
- A content cloud identifier describing the content cloud the endpoint is participating in.
- A host identifier (preferably unique to that host).
Where peers are randomly selected, the tracker may include the seed 104 as a peer with a probability of 1 /k, where k is the number of active peers in the cloud including the new peer.

When a peer (e.g. peer A) connects to one or more of the other peers (e.g. peer B) that the tracker has identified as being part of the content cloud 106, the peer (peer A) may perform authentication with the other peers (peer B). Although there is not necessarily an equivalent of a CRL for peers, the peers may identify each other by their host identifier or by an authorisation issued to allow the peer to participate in the cloud. The authentication between peers is beneficial so that a peer (peer A) can identify a peer (peer B) that provides it with an invalid block of data and can then block further communication with that peer for the remainder of the session (see steps 212 and 213). The authentication may also assist in preventing denial of service attacks mounted on a peer by a malicious peer by making multiple aborted or slow connections between the peer and the malicious peer. Through the authentication process, a peer may identify that the same peer is making multiple connection requests and then block some or all of those connections. The authentication between peers may also include providing information on where the peer that initiates the connection (peer A) obtained details of the other peer (peer B) from, e.g. the details of the tracker providing the peer endpoint information. This may permit a peer to check the authorisation of that tracker prior to initiating transfer of blocks between the peers.

A peer may connect to one or more other peers (in step 210) within the cloud 106 in order to obtain parts of the content. A limit may be set on the number of peers that a peer may connect to at any one time (e.g. 1 peer may connect to no more than 14 other peers). This limit may effectively be set by the limit on the number of peer endpoint details provided to the peer by the tracker (in step 209) or the limit may be set independently by the tracker, the publisher or the peer.

Whilst peers may authenticate each other, as above, the transmissions between them (e.g. in step 211) are not necessarily encrypted. Peers may, if required, negotiate a session key for privacy and apply a stream cipher.

Having received a block (in step 211), a peer may check the integrity of that block for example using a hash function, such as a homomorphic hash function. Details of the hash function(s) used for the individual blocks of content and the content as a whole may be provided to the peer in the SCD, as described above. In another example, the homomorphic hashes may be transmitted independently from the SCD. Hash functions map a large block of information, b, to an output h(b) typically of much smaller size. The hash function has the property that given a block b, it is computationally infeasible to find another block, b', with the same hash value, i.e. where h(b) = h(b'). This means that by checking that the calculated hash function of a received block of data matches the expected hash function, the peer can be relatively confident that the block received is the correct block and that the block has not been tampered with. Homomorphic hash functions have the additional property that the hash value of a linear combination of some input blocks can be constructed efficiently by a combination of the hashes of the input blocks. Consequentially, use of homomorphic hash functions is particularly suited to content distribution protocols that use network coding, such as Avalanche.

Once a peer has downloaded a block (in step 211) or alternatively, after the integrity of the block has been checked (in step 212), the tracker adds that peer to a list of active peers in the cloud and then may subsequently provide details of that peer to other peers in subsequent requests for peer endpoint information received from other peers that wish to participate in the cloud. In order for the peer to be added to the list of active peers in a cloud, the peer may be required to register with the tracker to identify that they have received some content. In other examples, the peer may be added to the list before it has downloaded a block, for example, when it has requested the SCD.

Having received all the required blocks for the content (step 214), the peer decodes the content, or otherwise reconstructs it where the content was not encoded (step 21 5). Before using the content or making it available to third parties, the peer does a final integrity check on the whole content (in step 216). The final integrity check may also involve checking that the calculated hash matches the expected hash (as described above with reference to step 212). Details of the expected hash, or parameters to enable it to be calculated, may be provided in the SCD.

The above description describes the use of hash functions and homomorphic hash functions by way of example only. Other techniques may alternatively be employed by the peer to enable them to determine with a high degree of confidence both that the individual parts of the content (e.g. the individual blocks) and the whole content received are valid and have not been tampered with (i.e. in steps 212 and 216).

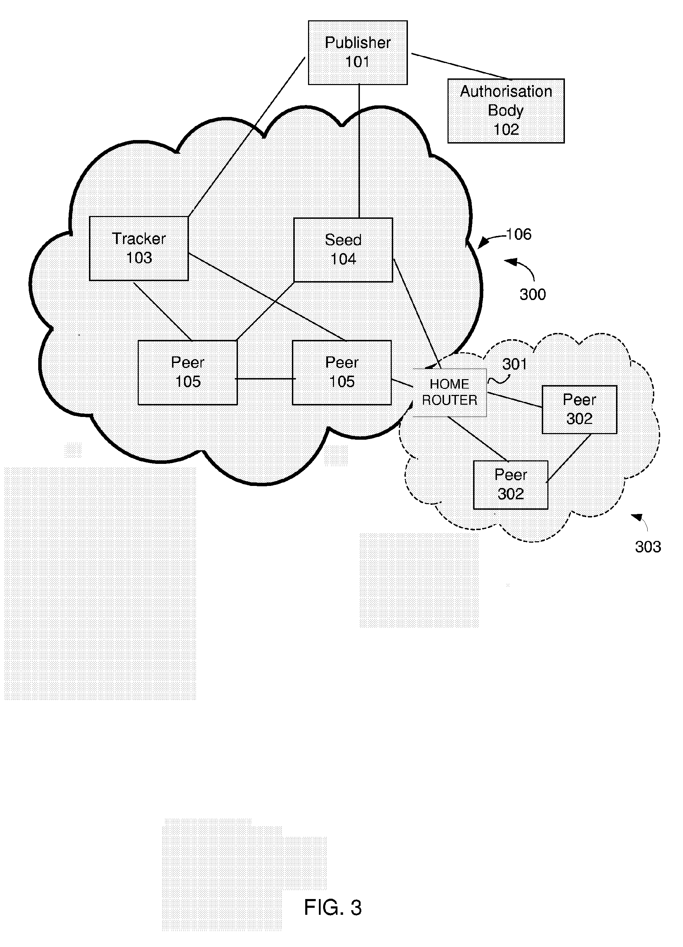

FIG. 3 shows a schematic diagram of a second content distribution system 300, which includes, in addition to the elements described above in relation to FIG. 1, a home router 301 and two peers 302 on a home network 303. The home router 301 performs network address translation. The home network 303 provides an extension to the content distribution cloud 106 and the two peers 302 on the home network 303 can distribute content between themselves and can also each maintain separate connections to peers within the cloud 106. This is because although the peers 302 on the home network may appear to have the same IP address as far as peers 105 outside the home network are concerned, they will be connected to the router via different ports. In another example, the network 303 could comprise a corporate network.

FIGS. 1 and 3 each show a single cloud 106. A peer may however be connected to more than one logically distinct cloud and many of the peers and trackers may be common between clouds. Each logically distinct cloud has one publisher and a publisher may be responsible for several clouds. A peer in one cloud may be acting as a seed in another cloud, or even acting as a tracker server. The terms 'seed', 'peer' and 'tracker' are used to define the role being played by the node in the cloud in question and the terms do not necessarily imply specific hardware requirements. For example, the seed, peer and tracker may each comprise a personal computer. Within the same cloud, a physical node may be performing more than one logical role, e.g. seed and tracker.

In the above examples, peers may be able to join any cloud or they may require specific authorisation to join a cloud, e.g. by purchasing the right to a particular download. The publisher 101 or other entity may set criteria for participation in a cloud. For example, only subscribers to a particular network or service may be eligible to participate in a cloud. In another example, the cloud may have minimum bandwidth requirements such that only peers who have connections that exceed a certain bandwidth (e.g. 512 MBit/s) may be allowed to participate in a cloud. In a further example, certain quotas may be associated with a cloud, for example detailing the total number of peers that can participate in a cloud or the maximum number (or proportion) of peers with a slow connection that can join a cloud.

The content described above may any kind of data including, but not limited to, software, data files, audio media and video media.

The above methods provide confidence that the content provided will be what is expected, however, they do not prevent misuse of non-public content. Consequently, additional protection may be provided in the form of license activation codes for software and DRM (Digital Rights Management) for audio and video media.

The methods described above may be implemented in software running on conventional hardware. The seed, tracker and peer protocols may be implemented in dedicated software or they may be integrated, each forming a su b-protocol.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

The steps of the methods described herein may be carried out in any suitable order, or simultaneously where appropriate.

It will be understood that the above description of a preferred embodiment is given by way of example only and that various modifications may be made by those skilled in the art.

## Claims

1. A method of controlling distribution of content over a network comprising:
receiving a content description and location information for a source of the content from a publisher, the content description comprising authorisation details associated with the publisher;
checking the validity of the authorisation details; and
if the authorisation details are valid, providing the content description to a node in the network.

2. A method according to claim 1, wherein the content description is provided to a node in response to a request from the node.

3. A method according to claim 1 or 2 further comprising:
confirming an identity of the node prior to providing the content description to the node.

4. A method according to any of the preceding claims, wherein the authorisation details associated with a publisher comprises details of a certificate issued by a certificate issuing entity, and wherein checking the validity of the authorisation details comprises:
accessing a certificate revocation list issued by the certificate issuing entity; and
determining if the certificate is on the certificate revocation list.

5. A method according to claim 4, further comprising:
storing the certificate revocation list; and
providing the certificate revocation list to a node in the network in response to a request from the node.

6. A method according to any of the preceding claims, further comprising:
maintaining a list of nodes that are connected to the network and that hold at least part of the content; and
providing at least a portion of the list of nodes to a node in the network in response to request from the node.

7. A method according to claim 6 further comprising:
confirming an identity of the node prior to providing the at least a portion of the list of nodes.

8. A computer program comprising computer program code means adapted to perform all the steps of any of the preceding claims when the program is run on a computer.

9. A method of receiving content being distributed over a network comprising:
receiving a content identifier and a tracker pointer;
requesting a content description from a first tracker identified from the tracker pointer, the content description comprising authorisation details associated with a publisher of the content;
receiving the content description;
checking the validity of the authorisation details;
receiving information on a source of the content from a second tracker; and
requesting a portion of the content from the source.

10. A method according to claim 9, wherein the first and the second trackers are the same.

11. A method according to claim 10, wherein the content description further comprises the information on the source of the content.

12. A method according to any of claims 9-11, wherein the content description further comprises information identifying the second tracker.

13. A method according to any of claims 9-12, wherein the authorisation details associated with a publisher comprises details of a certificate issued by a certificate issuing entity, and wherein checking the validity of the authorisation details comprises:
accessing a certificate revocation list issued by the certificate issuing entity; and
determining if the certificate is on the certificate revocation list.

14. A method according to any of claims 9-13, further comprising:
providing identification information to the first tracker prior to receiving the content description.

15. A method according to any of claims 9-14, further comprising:
providing identification information to the source; and
requesting identification information from the source.

16. A method according to claim 15, further comprising:
receiving the portion of the content from the source;
checking the validity of the portion of the content; and
if the portion is not valid, blocking communication with the source for a period of time.

17. A computer program comprising computer program code means adapted to perform all the steps of any of claims 9-16 when the program is run on a computer.

18. A method of publishing content for distribution over a network, the method comprising:
requesting authorisation to publish;
receiving authorisation details;
creating a content description comprising the authorisation details; and
transmitting the content description and location information for a source of the content to a tracker server.

19. A method according to claim 18, wherein requesting authorisation comprises requesting a certificate from a certificate issuing entity, and wherein the authorisation details comprise details of the certificate.

20. A computer program comprising computer program code means adapted to perform all the steps of claim 18 or 19 when the program is run on a computer.
